# EUROPÄISCHE PATENTANMELDUNG

(11) **EP 3 750 860 A1**
(43) Veröffentlichungstag der Anmeldung: **16.12.2020**
(21) Anmeldenummer: 19179736.4
(22) Anmeldetag: 12.06.2019
(51) Int. Cl.: C04B 35/573, C04B 35/626, B29C 64/118, B33Y 10/00, B33Y 70/00, B28B 1/00

(54) **VERFAHREN ZUR ADDITIVEN FERTIGUNG EINES GRÜNKÖRPERS AUS POLYMERMATERIAL UND DADURCH ERHÄLTLICHER GRÜNKÖRPER**

(71) Anmelder: Airbus Defence and Space GmbH, 82024 Taufkirchen (DE); Deutsches Zentrum für Luft- und Raumfahrt e.V., 51147 Köln (DE); Schunk Kohlenstofftechnik GmbH, 35452 Heuchelheim (DE)
(72) Erfinder: Metzner, Christian, 82024 Taufkirchen (DE); Nauditt, Gotthard, 35452 Heuchelheim (DE); Arnold, Daniel, 82024 Taufkirchen (DE); Marigo, Gloria, 51147 Köln (DE)
(74) Vertreter: KASTEL Patentanwälte PartG mbB

(57) **Zusammenfassung**

Die Erfindung betrifft ein Verfahren zur additiven Fertigung eines Grünkörpers (28) aus einem Polymermaterial. Der Grünkörper (28) kann zu einem Braunkörper (30) aus Kohlenstoff pyrolysiert werden. Der Braunkörper (30) kann dann durch Siliciuminfiltration zu einem keramischen Gegenstand (32) umfassend Silicium, Kohlenstoff und Silicumcarbid weiterverarbeitet werden. Als additives Fertigungsverfahren kommt insbesondere das Schmelzschichtungsverfahren oder FDM-Verfahren in Betracht. Das Polymermaterial ist ein thermoplastisches Polymermaterial. Da thermoplastische Polymere unter den Pyrolysebedingungen unter Verlust der Form des Grünkörpers (28) schmelzen können, wird erfindungsgemäß das thermoplastische Polymer vor der Pyrolyse stabilisiert. Für die Stabilisierung werden verschiedene Stabilisierungsstrategien vorgeschlagen: a) thermo-oxidatives Altern des Polymermaterials knapp unterhalb der Temperatur, bei der das Polymermaterial erweicht; b) Vermischen des Polymermaterials mit Nanofüllmaterialien und gegebenenfalls Mikrofüllmaterialien vor der additiven Fertigung des Grünkörpers (28); c) chemisches oder thermisches Vernetzen des Polymermaterials oder Vernetzen des Polymermaterials mit Strahlung nach der additiven Fertigung des Grünkörpers (28). Der so erhältliche stabilisierte Grünkörper (28) kann anschließend zu einem Braunkörper (30) pyrolysiert werden. Der Braunkörper (30) wird durch Siliciuminfiltration zu einem keramischen Gegenstand (32) weiterverarbeitet.

## Beschreibung

Die Erfindung betrifft ein Verfahren zum Herstellen eines Grünkörpers auf Polymermaterialbasis mit Formstabilität bei der Pyrolyse zu einem Braunkörper, ein Verfahren zum Herstellen eines Braunkörpers aus dem Grünkörper und ein Verfahren zum Herstellen eines keramischen Gegenstands aus dem Braunkörper.

Die Erfindung betrifft weiterhin den Grünkörper, den Braunkörper und den keramischen Gegenstand, die durch diese Verfahren erhältlich sind.

Keramische Gegenstände können unter anderem aus einem Grünkörper aus einem Polymermaterial hergestellt werden, der bei einer Temperatur unter 2000 °C zu einem Braunkörper aus Kohlenstoff pyrolysiert wird. Anschließend wird der Braunkörper in einem weiteren Schritt durch Inkontaktbringen mit flüssigem Silicium unter Siliciuminfiltration zu einem silicumcarbidhaltigen keramischen Gegenstand weiterverarbeitet.

Grünkörper aus Polymermaterial werden üblicherweise durch subtraktive Fertigungsverfahren, wie Fräsen oder Drehen, hergestellt. Da die Pyrolyse des Grünkörpers bei hohen Temperaturen durchgeführt wird und der Grünkörper bei diesen hohen Temperaturen möglichst formstabil sein soll, wird er üblicherweise aus einem Duroplast ("thermoset" oder TS-Polymer) hergestellt, wie einem Phenolharz.

Grünkörper aus Polymermaterial können auch additiv aus einem Polymerpulver oder einem Polymerfilament hergestellt werden. Als additive Fertigungsverfahren kommen vor allem 3D-Druck-Verfahren, insbesondere die Schmelzschichtung in Frage, die auch als "Fused Layer Modeling" (FLM), "Fused Filament Fabrication" (FFF) oder "Fused Layer Manufacturing" (FLM) bezeichnet wird. Bei diesem Verfahren wird der Grünkörper aus einem schmelzfähigen Polymermaterial aufgebaut, das im geschmolzenen Zustand durch eine oder mehrere horizontal bewegliche Düsen unter Bildung von Schichten auf einer Bauplattform abgeschieden wird.

Die im FLM-Verfahren verwendeten Polymere sind daher vorrangig thermoplastische Polymere mit niedriger Schmelztemperatur, wie Polylactide (PLA) oder Acrylnitril-Butadien-Styrol (ABS).

Ein Nachteil der duroplastischen Polymere besteht darin, dass sie nur schwierig in einem additiven Fertigungsverfahren, das das Schmelzen des Polymers erfordert, einsetzbar sind.

Ein Nachteil der thermoplastischen Polymere besteht darin, dass sie eine inhärente Erweichung bei der Glasübergangstemperatur und/oder der Schmelztemperatur des Polymers zeigen. Dies kann zu geometrischen Verformungen während der Pyrolyse des aus dem thermoplastischen Polymer hergestellten Grünkörpers führen.

Es ist daher Aufgabe der vorliegenden Erfindung, ein verbessertes Verfahren für die additive Fertigung eines Erzeugnisses aus thermoplastischem Polymermaterial anzugeben.

Die Aufgabe wird durch den Gegenstand der unabhängigen Ansprüche gelöst.

Vorteilhafte Ausgestaltungen sind Gegenstand der abhängigen Ansprüche.

Nach einem ersten Aspekt schafft die Erfindung ein Verfahren zum Herstellen eines Grünkörpers auf Polymermaterialbasis mit Formstabilität bei der Pyrolyse zu einem Braunkörper, das folgende Schritte umfasst:
a) Bereitstellen des Polymermaterials;
b) additives Fertigen des Grünkörpers umfassend das Polymermaterial,
wobei das Polymermaterial in Schritt a) mit einem Stabilisierungsmittel vermischt wird und/oder nach Schritt b) ein weiterer Schritt c) durchgeführt wird, in dem das Polymermaterial des Grünkörpers vollständig oder in Teilbereichen, wie in Oberflächenbereichen, des Grünkörpers stabilisiert wird.

Es ist bevorzugt, dass das Polymermaterial ein oder mehrere Polymere umfasst, die unter thermoplastische Polymeren und thermoplastischen Elastomere ausgewählt werden.

Es ist bevorzugt, dass das Polymermaterial ein oder mehrere Polymere umfasst, die unter chemisch vernetzbaren thermoplastischen Polymeren, thermisch vernetzbaren thermoplastischen Polymere, mit einem Elektronenstrahl vernetzbaren thermoplastischen Polymeren, mit alpha-Strahlung beta-Strahlung oder gamma-Strahlung vernetzbaren thermoplastischen Polymere ausgewählt werden.

Es ist bevorzugt, dass das Polymermaterial ein oder mehrere Polymere umfasst, die unter Einwirkung von Wärme alterungsfähigen thermoplastischen Polymeren ausgewählt werden.

Es ist bevorzugt, dass das Polymermaterial ein oder mehrere Polymere umfasst, die unter Polyaryletherketonen, wie Polyetheretherketon (PEEK) oder Polyetherketonketon (PEKK), Polylactiden (PLA), Acrylnitril-Butadien-Styrolen (ABS), Polycarbonaten (PC), Polyphenylsulfonen (PPS), Aryl-Styrol-Acrylat-Copolymeren (ASA), Polyethylenterephthalaten (PET), Polyoxymethylenen (POM), Polyphenylsulfiden (PPS), Polyamiden und Polyetherimiden ausgewählt werden.

Es ist bevorzugt, dass das Polymermaterial unter thermo-oxidierbaren thermoplastische Polymere, wie insbesondere Polyaryletherketonen, ausgewählt wird.

Es ist bevorzugt, dass das Polymermaterial ein oder mehrere Polymere umfasst, die unter thermoplastischen Polymere mit einer hohen Anzahl an Kohlenstoffatomen, bezogen auf die Gesamtzahl der Kohlenstoffatome pro wiederkehrende Einheit, und thermoplastischen Polymeren ausgewählt werden, die bei ihrer Pyrolyse eine hohe Kohlenstoffausbeute liefern.

Es ist besonders bevorzugt, dass das Polymermaterial ein oder mehrere Polymere umfasst, die unter Polyaryletherketonen, Polyphenylsulfonen, Polyamiden und Polyetherimiden ausgewählt werden.

Es ist bevorzugt, dass das in Schritt a) mit dem Polymermaterial vermischte Stabilisierungsmittel ein oder mehrere Füllmaterialien umfasst, die insbesondere aus einer Gruppe ausgewählt werden, die Mikrofüllmaterialien, Nanofüllmaterialien und Füllmaterialien, wie beispielsweise Mikrofüllmaterialien, auf der Basis von Siliciumcarbid (SiC), Kohlenstoff (C) und/oder Silicium (Si) umfasst.

Auf der Basis von SiC, C und/oder Si bedeutet in der Anmeldung ganz allgemein, dass das Mikrofüllmaterial SiC, C und/oder Si enthalten kann oder aus SiC, C und/oder Si bestehen kann.

Es ist bevorzugt, dass das in Schritt a) mit dem Polymermaterial vermischte Stabilisierungsmittel ein oder mehrere Nanofüllmaterialien umfasst, die aus einer Gruppe ausgewählt werden, die kohlenstoffhaltige Nanopartikel, Kohlenstoffnanoröhren (CNT), Ruße, insbesondere Industrieruße, und Fullerene umfasst.

Es ist bevorzugt, dass in Schritt a) das Stabilisierungsmittel in einem Anteil von vorzugsweise 1 Masse-% bis 8 Masse-%, bevorzugter 3 Masse-% bis 5 Masse-%, zugegeben wird.

Es ist bevorzugt, dass das in Schritt a) bereitgestellte Polymermaterial umfasst:
- ein oder mehrere thermoplastische Polymere, insbesondere Polyaryletherketone, vorzugsweise Polyetheretherketon oder Polyetherketonketon, insbesondere in einem Anteil größer als 10 Masse-%, vorzugsweise größer als 30 Masse-%, beispielsweise größer als 50 Masse-%;
- ein oder mehrere Mikrofüllstoffe, insbesondere auf der Basis von Siliciumcarbid, Kohlenstoff und/oder Silicium, und
- ein oder mehrere Nanofüllstoffe, insbesondere Kohlenstoffnanoröhren, insbesondere in einem Anteil im Bereich von 1 Masse-% bis 7 Masse-%, vorzugsweise 3 Masse-% bis 5 Masse-%.

Es ist bevorzugt, dass Schritt c) das Erhitzen des Grünkörpers auf eine vorgegebene Temperatur über eine vorgegebene Zeit umfasst, wobei Temperatur und Zeit so gewählt werden, dass eine Alterung, insbesondere thermo-oxidative Alterung des Polymermaterials herbeigeführt wird. Mit der Alterung geht eine Kettenverkürzung / Radikalbildung einher.

Es ist bevorzugt, dass Schritt c) das chemische Vernetzen des Polymermaterials des Grünkörpers umfasst.

Es ist bevorzugt, dass Schritt c) das Bestrahlen des Grünkörpers mit alpha-Strahlung, einem Elektronenstrahl oder gamma-Strahlung zum Vernetzen des Polymermaterials umfasst.

Es ist bevorzugt, dass Schritt c) das Erhitzen des Grünkörpers auf eine Temperatur umfasst, bei der eine thermisch induzierte Vernetzung des Polymermaterials stattfindet.

Es ist bevorzugt, dass Schritt c) das Erhitzen des Grünkörpers auf eine vorgegebene Temperatur über eine vorgegebene Zeit umfasst, wobei Temperatur und Zeit so gewählt werden, dass die Steifigkeit, die Härte und die Festigkeit des Polymermaterials verringert werden, ohne die Formtreue des Bauteils während der Pyrolyse zu beeinflussen, und/oder die Sprödigkeit, der Modul, die Wärmestabilität erhöht werden und/oder die Schmelzfähigkeit beseitigt wird.

Es ist bevorzugt, dass Schritt c) das Erhitzen des Polymermaterials auf eine Temperatur unterhalb der Temperatur umfasst, bei der das Erweichen des Polymermaterials einsetzt, insbesondere eine Temperatur, die 5 °C bis 50 °C, insbesondere 10 °C bis 30 °C unter der Temperatur liegt, bei der das Erweichen des Polymermaterials einsetzt.

Es ist bevorzugt, dass Schritt c) das Erhitzen des Polymermaterials auf eine vorgegebene Temperatur über einen Zeitraum von 1 bis 15 Tagen umfasst.

Es ist bevorzugt, dass Schritt c) das Erhitzen des Polymermaterials auf eine vorgegebene Temperatur, die 5 °C bis 50 °C, insbesondere 10 °C bis 30 °C unter der Wärmeformbeständigkeitstemperatur (HDT) oder der Schmelztemperatur (Tm) liegt, über eine vorgegebene Zeit umfasst, die abhängig von der gewählten Temperatur so gewählt wird, dass eine Alterung des Polymermaterials stattfindet; und/oder

Es ist bevorzugt, dass Schritt c) das Erhitzen des Polymermaterials an der Umgebungsluft, insbesondere unter Erhalt einer thermo-oxidativen Alterung des Polymermaterials umfasst.

Es ist bevorzugt, dass Schritt c) das Auswählen eines Polymers als Polymermaterial oder für das Polymermaterial umfasst, das Alterungsfähigkeiten aufweist, wie eines Polyaryletherketons, insbesondere von Polyetheretherketon oder Polyetherketonketon.

Es ist bevorzugt, dass Schritt c) das Erhitzen des Polymermaterials, insbesondere umfassend ein Polyaryletherketon, in einem Ofen auf eine Temperatur im Bereich von 280 °C bis 320 °C, insbesondere 300 °C, an der Luft, und Beibehalten dieser Temperatur über mindestens 3 Tage umfasst.

Es ist bevorzugt, dass Schritt c) das Erhitzen des Polymermaterials unter Unterstützung der Bereiche des Grünkörpers umfasst, die sich beim Erhitzen durch Erweichen verformen könnten.

Es ist bevorzugt, dass Schritt c) das chemische Vernetzen des Polymermaterials in Teilbereichen des Grünkörpers, wie im Oberflächenbereich, oder in seinem gesamten Volumen umfasst.

Es ist bevorzugt, dass Schritt c) das chemische Vernetzen eines Polymermaterials umfasst, das ein Polyaryletherketon, insbesondere Polyetheretherketon, umfasst.

Es ist bevorzugt, dass Schritt c das chemische Vernetzen eines Polymermaterials, das ein Polyaryletherketon, insbesondere Polyetheretherketon, umfasst.

Es ist bevorzugt, dass Schritt c) das chemische Vernetzen mit einem Vernetzungsmittel oder Härter, das/der dem Polymermaterial in Schritt a) und vor dem additiven Fertigen des Grünkörpers in Schritt b) zugesetzt wird, umfasst.

Es ist bevorzugt, dass Schritt c) das chemische Vernetzen nach Imprägnieren der Oberfläche des Grünkörpers mit einem Vernetzungsmittel oder Härter umfasst.

Es ist bevorzugt, dass Schritt c) das Bestrahlen des Grünkörpers mit alpha-Strahlung, beta-Strahlung, einem Elektronenstrahl oder gamma-Strahlung zum Vernetzen des Polymermaterials in Teilbereichen des Grünkörpers, wie im Oberflächenbereich, oder in seinem gesamten Volumen umfasst.

Es ist bevorzugt, dass Schritt c) das Verwenden eines Polymermaterials umfassend ein Polyamid und das Bestrahlen des Polyamids mit einem Elektronenstrahl umfasst.

Es ist bevorzugt, dass Schritt c) das thermische Vernetzen eines Polyphenylsulfons, insbesondere unter Erhöhen des Molekulargewichts durch das Vernetzen, umfasst.

Es ist bevorzugt, dass das in Schritt b) durchgeführte additive Fertigungsverfahren das Schmelzschichtungsverfahren umfasst. Das Schmelzschichtungsverfahren wird englischsprachig auch als "Fused Deposition Modeling" (FDM), "Fused Filament Fabrication" (FFF) oder "Fused Layer Manufacturing (FLM) bezeichnet.

Nach einem weiteren Aspekt schafft die Erfindung ein Verfahren zum Herstellen eines Braunkörpers aus Kohlenstoff, das umfasst:
- Durchführen eines der weiter oben beschriebenen Verfahren unter Erhalt eines stabilisierten Grünkörpers; und
- Pyrolysieren des stabilisierten Grünkörpers unter Erhalt eines Braunkörpers, der im Wesentlichen aus Kohlenstoff besteht.

Es ist bevorzugt, dass die Pyrolyse bei einer Temperatur unter 2000 °C, wie bei 850 °C bis 1650 °C, durchgeführt wird. Die Pyrolyse kann im Bereich von 850 °C bis 1150 °C, vorzugsweise bei 1050 °C, erfolgen. Sie kann in einer Standardpyrolyse aber auch bei einer hohen Temperatur bis 1650 °C, beispielsweise bei 1600 °C, durchgeführt werden, bei der auch das LSI-Verfahren ("Liquid Silicon Infiltration"), also die Silicierung des Braunkörpers unter Erhalt eines keramischen Gegenstands, durchgeführt werden kann.

Es ist bevorzugt, dass die Pyrolyse unter einem Schutzgas, wie in einer Stickstoffatmosphäre, durchgeführt wird.

Nach einem weiteren Aspekt schafft die Erfindung ein Verfahren zum Herstellen eines keramischen Gegenstands, der Siliciumcarbid umfasst, wobei das Verfahren die folgenden Schritte umfasst:
- Durchführen eines der weiter oben beschriebenen Verfahren zur Herstellung eines Braunkörpers;
- Inkontaktbringen des Braunkörpers mit geschmolzenem Silicium unter Siliciuminfiltration in den Braunkörper und Bildung eines keramischen Gegenstands.

Nach einem weiteren Aspekt schafft die Erfindung einen Grünkörper, der ein wie weiter oben definiertes Polymermaterial umfasst oder der nach einem der weiter oben beschriebenen Verfahren erhältlich ist.

Nach einem weiteren Aspekt schafft die Erfindung einen Braunkörper, der nach einem der weiter oben beschriebenen Verfahren erhältlich ist.

Nach einem weiteren Aspekt schafft die Erfindung einen keramischen Gegenstand, der nach einem der weiter oben beschriebenen Verfahren erhältlich ist.

Nach einem weiteren Aspekt betrifft die Erfindung die Verwendung eines oder mehrerer Nanofüllmaterialien, insbesondere von kohlenstoffhaltigen Nanopartikeln, Kohlenstoffnanoröhren (CNT), Rußen, ganz besonders Industrierußen, und Fullerenen für die Stabilisierung der Form, insbesondere für den Erhalt einer Formtreue, eines Grünkörpers aus einem Polymermaterial während der Alterung des Grünkörpers und/oder während der Pyrolyse des Grünkörpers zu einem Braunkörper.

Für diese Verwendung ist es bevorzugt, die Nanofüllmaterialien allein oder in Kombination mit einem oder mehreren Mikrofüllstoffen, insbesondere Mikrofüllstoffen auf der Basis von Siliciumcarbid, Kohlenstoff und/oder Silicium, einzusetzen.

Für diese Verwendung ist es bevorzugt, die Nanofüllmaterialien in einem Anteil von 1 Masse-% bis 8 Masse-%, noch bevorzugter 3 Masse-% bis 5 Masse-%, bezogen auf die Gesamtmasse des Polymermaterials, einzusetzen.

Für diese Verwendung ist es bevorzugt, Kohlenstoffnanoröhren und/oder Ruße als Nanofüllmaterialien einzusetzen.

Ausführungsbeispiele werden im Folgenden anhand der beigefügten Zeichnungen näher erläutert. Darin zeigt:
- Fig. 1: eine schematische Darstellung einer Vorrichtung zur Durchführung eines Schmelzschichtungsverfahrens;
- Fig. 2: ein Diagramm, in dem die Änderung der Wärmeformbeständigkeitstemperatur (HDT) und der Schmelztemperatur (Tm) eines Grünkörpers aus reinem PEKK und eines Grünkörpers aus PEKK/CNT in Abhängigkeit von der Dauer der Alterung darstellt wird;
- Fig. 3: ein Diagramm, in dem die Änderung des Speichermoduls derselben Grünkörpers bei der Schmelztemperatur (Tm) von PEKK in Abhängigkeit von der Dauer der Alterung dargestellt wird;
- Fig. 4: fotografische Darstellungen des Ergebnisses der Pyrolyse eines Grünkörpers aus nicht gealtertem PEEK (Foto I) und eines Grünkörpers aus gealtertem PEEK (Foto II);
- Fig. 5: fotographische Darstellungen des Ergebnisses der Pyrolyse eines Grünkörpers aus PLA (Foto I) und eines Grünkörpers aus PLA/CNT (Foto II);
- Fig. 6: ein Diagramm (I), in dem die Zunahme des Molekulargewichts eines Polyphenylsulfons durch Alterung in Folge von chemischer Vernetzung in Abhängigkeit von der Zeit dargestellt wird, und eine schematische Darstellung (II) zu den chemischen Prozessen während der Vernetzung des Polyphenylsulfons;
- Fig. 7: eine Darstellung des Verfahrens zum Herstellen eines keramischen Gegenstands aus einem 3D-gedruckten Grünkörper aus PEEK;
- Fig. 8: eines 3D-gedruckten Grünkörpers aus PEKK+CNT vor der Wärmebehandlung (Foto A) und des durch Pyrolyse daraus resultierenden Braunkörpers (Foto B).

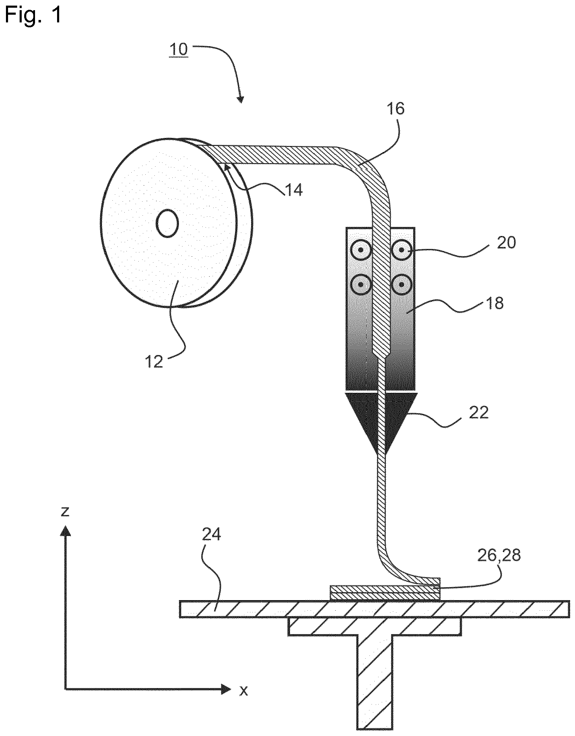

Fig. 1 zeigt in schematischer Darstellung eine Vorrichtung 10 zum Durchführen des Schmelzschichtungsverfahrens. Die Vorrichtung 10 umfasst eine Filamentspule 12, auf die ein Filament 14 aus dem zu verarbeitenden Polymermaterial 16 aufgewickelt ist. Die Vorrichtung 10 weist ferner einen Extruder 18 mit Transportrollen 20 auf, die dafür vorgesehen sind, das Filament 14 zu fördern. Am stromabwärts gelegenen Ende des Extruders 18 ist ein beheizter Düsenkopf 22 zum Aufheizen von hindurchtretendem Filament 14 auf eine Temperatur oberhalb der Schmelztemperatur des Polymermaterials 16 montiert. Unterhalb des Extruders 18 und des beheizten Düsenkopfes 22 ist ein Druckbett 24 angeordnet, das für die Ablage von geschmolzenem Filament 14 und den schichtweisen Aufbau des Bauteils 26, hier eines Grünkörpers 28, vorgesehen ist. Die Vorrichtung 10 kann zur schichtweisen Ausbildung des Bauteils 26 aus geschmolzenem Filament 14 mit hoher Präzision parallel zu der Oberfläche des Druckbettes 24 in x,y-Richtung verfahren werden. Für die Stapelung der Schichten übereinander wird das Druckbett 24 in z-Richtung gesenkt.

Das Schmelzschichtungsverfahren umfasst das Abrollen des Filaments 14 aus Polymermaterial 16 von der Filamentspule 12, das Fördern des Filaments 14 in den Extruder 18 mit Hilfe der Transportrollen 20 und das Aufheizen des Polymermaterials 16 auf eine Temperatur oberhalb seiner Schmelztemperatur Tm mit Hilfe des beheizten Düsenkopfes 22. Das Filament 14 aus geschmolzenem Polymermaterial 16 verlässt den Extruder 18, wobei die Vorrichtung 10 den CAD-Daten der gewünschten Form des zu konstruierenden Grünkörpers 28 entsprechend in x,y-Richtung bewegt wird. Sobald eine Schicht vollständig an den gewünschten Stellen mit Polymermaterial 16 bedeckt ist, wird das Druckbett 24 um eine der Schichtdicke einer Schicht entsprechende Strecke in z-Richtung abgesenkt.

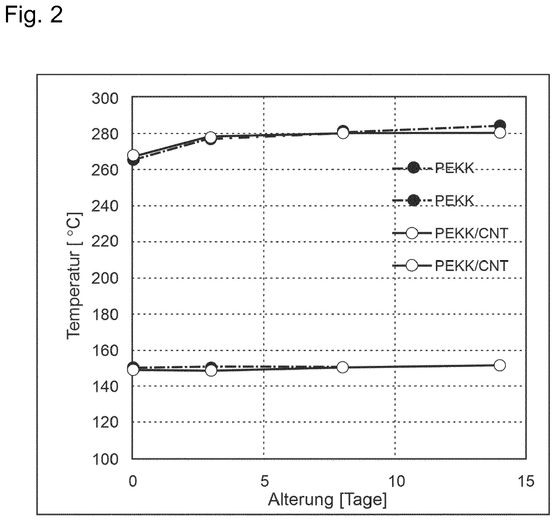

In Fig. 2 wird die Änderung der Wärmeformbeständigkeitstemperatur (HDT) und der Schmelztemperatur (Tm) eines Grünkörpers 28 aus reinem Polyetherketonketon (PEKK) und eines Grünkörpers 28 aus PEKK und Kohlenstoffnanoröhren (CNT) in Abhängigkeit von der Dauer der Alterung darstellt.

Die untere Kurve bei etwa 150 °C zeigt, dass die Wärmeformbeständigkeitstemperatur (HDT) im Laufe einer 14tägigen Alterung für beide Polymermaterialien 16 praktisch unverändert bleibt. Die obere Kurve bei etwa 260 bis 280 °C zeigt, dass die Schmelztemperatur Tm sowohl für reines PEKK als auch für PEKK/CNT bei einer 14tägigen Alterung bei beispielsweise etwa 280 °C bis 320 °C, beispielsweise 300 °C, an der Luft um etwa 20 °C ansteigt.

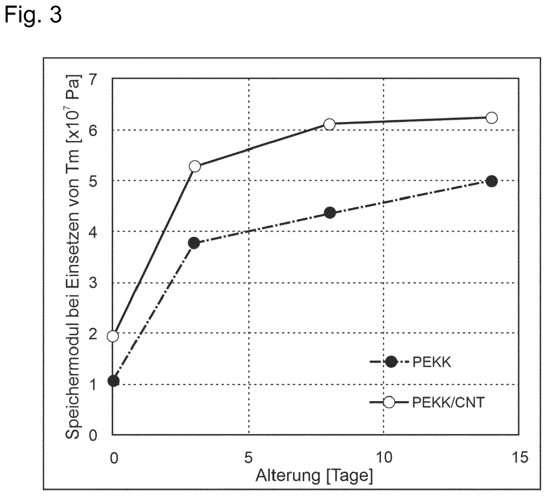

Fig. 3 enthält ein Diagramm, in dem die Änderung des Speichermoduls eines PEKK-Grünkörpers 28 und eines PEKK/CNT-Grünkörpers 28 knapp unterhalb der Schmelztemperatur Tm von PEKK oder bei der Schmelztemperatur Tm von PEKK in Abhängigkeit von der Dauer der Alterung dargestellt wird (Alterungstemperatur wie bei Fig. 2).

Für den PEKK-Grünkörper 28 nimmt der Speichermodul um einen Faktor 5 zu, wobei der stärkste Anstieg innerhalb der ersten 3 Tage festgestellt wird. Für den PEKK/CNT-Grünkörper 28 nimmt der Speichermodul um einen Faktor 3 zu, wobei auch hier der stärkste Anstieg innerhalb der ersten 3 Tage festgestellt wird.

Hieraus folgt verallgemeinerbar für alle beanspruchten Materialkombinationen und Verfahrensweisen, dass eine Verbesserung der mechanischen Eigenschaften bereits nach einer relativ kurzen Zeit von 3 Tagen erreicht werden kann, wenn die Alterung knapp unter der Schmelztemperatur des Polymermaterials, wie knapp unterhalb des einsetzenden Schmelzens oder beim einsetzenden Schmelzen des Polymermaterials durchgeführt wird.

Hieraus folgt weiterhin verallgemeinerbar für alle beanspruchten Materialkombinationen und Verfahrensweisen, dass es vorteilhaft sein kann, verschiedene Stabilisierungsstrategien zu kombinieren. Während für den Grünkörper 28 aus reinem PEKK im nicht gealterten Zustand ein Speichermodul bei Tm von 1 x 10⁷ Pa erhalten wird, liegt der Speichermodul für gealtertes und CNT enthaltendes PEKK bei 6 x 10⁷ Pa. Durch die Kombination zweier Strategien (hier: Alterung + Nanofüllmaterial) kann eine Erhöhung des Speichermoduls um Faktor 6 erzielt werden.

Die folgenden beiden Figuren zeigen, welche Auswirkungen das Pyrolysieren eines polymeren Grünkörpers 28 ohne Anwendung einer der Stabilisierungsstrategien auf die Braunkörperbildung hat, und dass das Anwenden einer oder mehrerer der hier vorgestellten Stabilisierungsstrategien zu perfekt geformten Braunkörpern 30 aus Kohlenstoff führt.

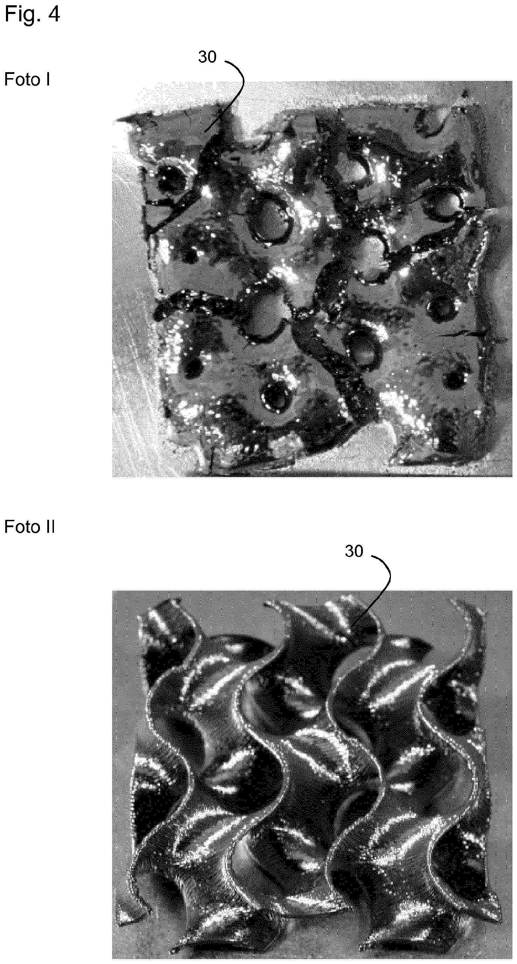

Fig. 4 zeigt fotografische Darstellungen des Ergebnisses der Pyrolyse eines Grünkörpers 28 aus nicht gealtertem PEKK (Foto I) und eines Grünkörpers 28 aus gealtertem PEKK (Foto II).

Wenn der Grünkörper 28 aus nicht gealtertem PEKK besteht, führt die Temperatur, bei der die Pyrolyse durchgeführt wird, zu einem Schmelzen und Zerlaufen des Grünkörpers 28. Es wird ein unbrauchbarer Braunkörper 30 erhalten, der aber noch die ursprüngliche Form des Grünkörpers 28 erahnen lässt.

Wenn der Grünkörper 28 aus Polymermaterial 16, wie aus PEKK, jedoch beispielsweise 3 Tage beispielsweise bei 300 °C an der Umgebungsluft gehalten wurde, führt dies zu einer Alterung des Polymers und zu verbesserten Eigenschaften, wie einem Verlust der Schmelzeigenschaften, jedenfalls bei den Temperaturbedingungen der Pyrolyse. Es wird dann ein Braunkörper 30 aus Kohlenstoff oder überwiegend aus Kohlenstoff erhalten (Foto II), dessen Form der Form des Grünkörpers 28 aus Polymermaterial 16, hier gealtertem PEKK, vor der Pyrolyse entspricht.

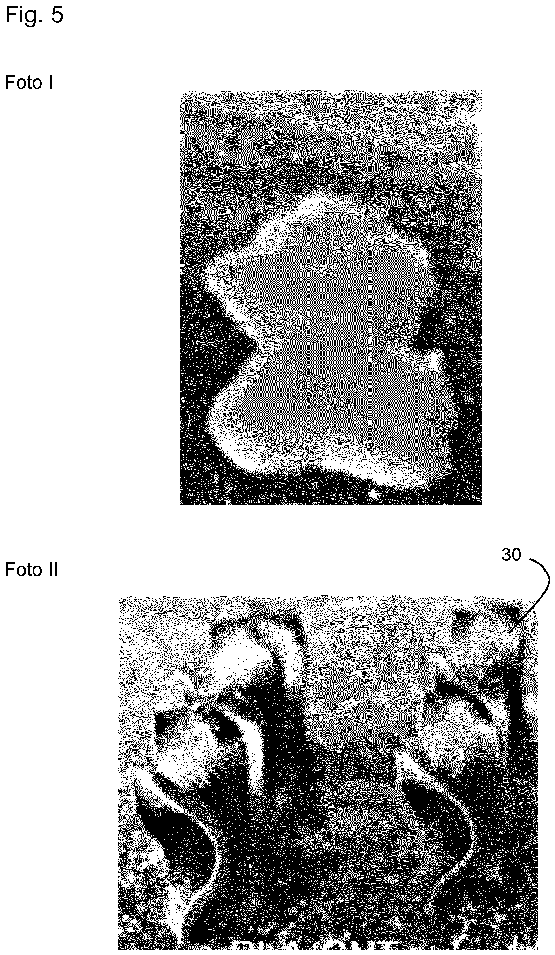

Fig. 5 zeigt fotografische Darstellungen des Ergebnisses der Pyrolyse eines Grünkörpers 28 aus Polylactid (PLA) (Foto I) und eines Grünkörpers 28 aus PLA mit Kohlenstoffnanoröhren (CNT) (Foto II).

Wenn der Grünkörper 28 aus reinem PLA ohne Nanopartikel besteht, führt die Temperatur, bei der die Pyrolyse durchgeführt wird, zu einem vollständigen Schmelzen und Zerlaufen des Grünkörpers 28. Das Aufschmelzen ist vollständig. Die ursprüngliche Form des Grünkörpers 28 ist nicht mehr erkennbar.

Wenn der Grünkörper 28 aus Polymermaterial 16, wie aus PLA/CNT besteht, führt dies zu deutlich verbesserten mechanischen Eigenschaften. Es wird ein Braunkörper 30 beispielsweise aus 100 % Kohlenstoff (Foto II) erhalten, dessen Form der Form des Grünkörpers 28 aus Polymermaterial 16, hier PLA/CNT, vor der Pyrolyse entspricht.

Mit dem eingearbeiteten Nanofüllmaterial werden Nachteile thermoplastischer Materialien gemildert oder ganz beseitigt. CNTs, aber auch Ruße (CB) oder Fullerene, erzeugen während der Pyrolyse eine Art Netzwerk/Mikronetzwerk. Das Kohlenstoff-Netzwerk kann als tragende Komponente wirken, wenn das Polymer erweicht. Dies ermöglicht es, das Polymer in den Kohlenstoff-Zustand zu überführen und dabei die geometrische Integrität des Teils zu wahren. Außerdem ermöglicht die Addition von CNTs oder CBs, die sich in das Polymer des Grünkörpers 28 einfügen, eine erhöhte Kohlenstoffausbeute.

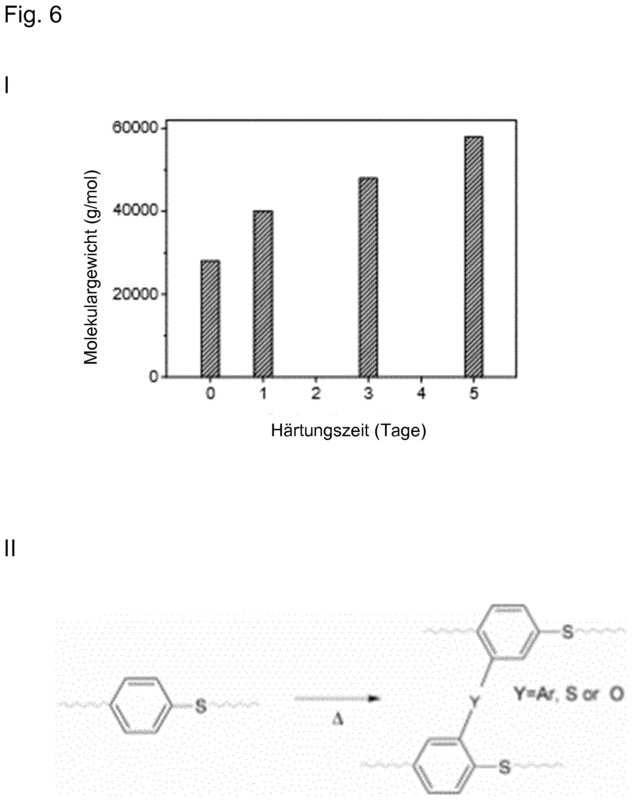

Fig. 6 zeigt ein Diagramm (I), in dem die Zunahme des Molekulargewichts eines Polyphenylsulfons durch Alterung in Folge von chemischer Vernetzung in Abhängigkeit von der Zeit dargestellt wird. Nach fünftägiger thermischer Vernetzung steigt das Molekulargewicht des Polyphenylsulfons von ca. 38 000 auf knapp unter 60 000 g/mol). Mit dieser Vernetzung verbessern sich die mechanischen Eigenschaften des PPS. Grünkörper 28 können aus diesem vernetzten PPS hergestellt werden und dann zum Braunkörper 30 pyrolysiert werden. In Fig. 6 (II) werden schematisch die chemischen Prozesse während der Vernetzung des Polyphenylsulfons dargestellt.

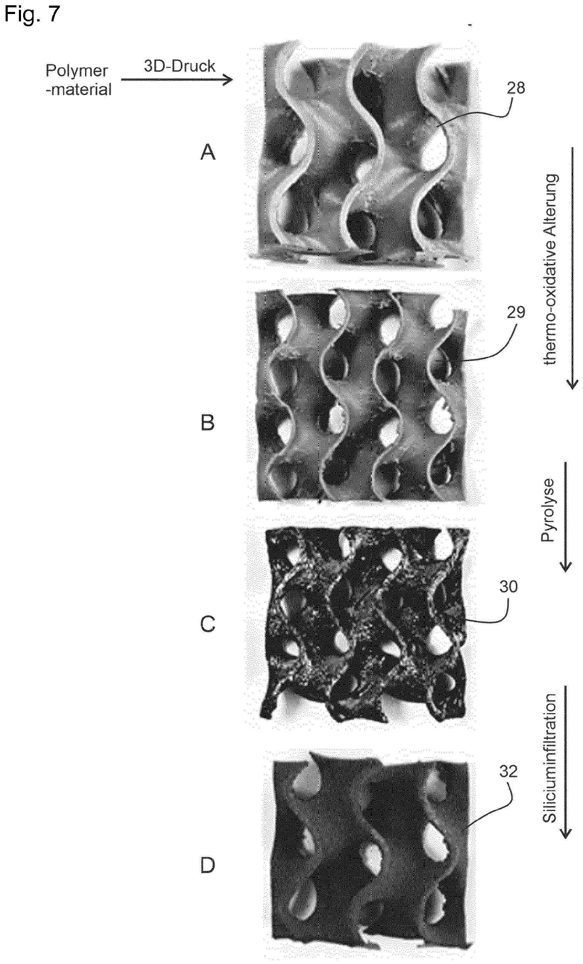

Fig. 7 stellt das Gesamtverfahren vom Polymermaterial 16, hier beispielsweise PEEK, bis zum keramischen Gegenstand 32 dar. In einem ersten Schritt wird das PEEK 16 in einem 3D-Druckverfahren, wie dem FDM-Verfahren, zu einem Grünkörper 28 aus PEEK verarbeitet (Foto A). Anschließend folgt die thermo-oxidative Alterung des PEEK Grünkörpers 28 beispielsweise bei 300 °C an der Luft über 3 Tage. Andere Temperaturen und Zeiten sind möglich, sofern sie zu einer thermo-oxidativen Alterung von PEEK führen.

Foto B zeigt das Ergebnis dieser Alterung. Der stabilisierte Grünkörper 29 ist deutlich dunkler und verfärbt, beispielsweise von einer beigen Färbung in eine rötlichorange Färbung, was auf die Kettenverkürzung / Radikalbildung während der thermo-oxidativen Alterung hinweist.

Anschließend wird der stabilisierte Grünkörper 29 beispielsweise bei 1600 °C zu einem Braunkörper 30 pyrolysiert (siehe Foto C). Die Entstehung von Kohlenstoff ist anhand des metallischen oder graphitähnlichen Glanzes des Braunkörpers (30) zu erkennen. Die Form des gealterten Grünkörpers 29 bleibt trotz der hohen Pyrolysetemperatur im Wesentlichen unverändert erhalten.

Im letzten Schritt folgt die Infiltration von flüssigem Silicium bei beispielsweise etwa 1600 °C unter Erhalt eines matt reflektierenden keramischen Gegenstands 32 (Foto D), der Siliciumcarbid, Silicium und Kohlenstoff umfasst.

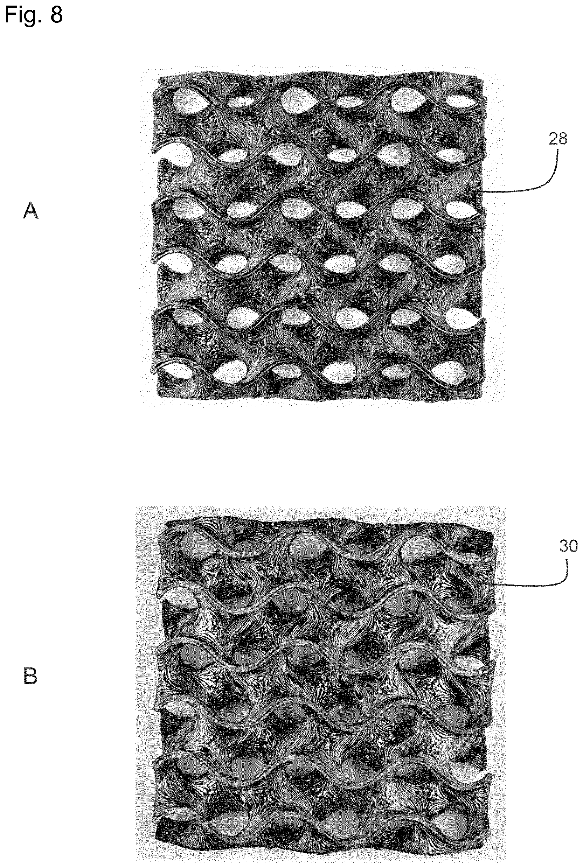

Fig. 8 zeigt einen 3D-gedruckten Grünkörpers 28 aus PEKK und CNT vor der Wärmebehandlung (Foto A) und den durch Pyrolyse daraus resultierenden Braunkörper 30 (Foto B). Der Grünkörper 28 enthält beispielsweise 3 bis 5 Masse-% CNT. Die Wärmebehandlung wird 5 Tage bei 280 °C durchgeführt. Die Pyrolyse erfolgt beispielsweise bei 1100 °C über 4 h.

Es hat sich herausgestellt, dass bestimmte Polymere für bestimmte Vernetzungsreaktionen besonders gut geeignet sind. Danach können insbesondere Polyaryletherketone chemisch vernetzt werden, Polyphenylsulfone thermisch vernetzt werden und Polyamide mit einem Elektronenstrahl vernetzt werden.

Der Erfindung liegt das folgende technische Problem zu Grunde: Keramiken können über Pyrolyse von Kohlenstoffspendern (z. B. Phenolharz-Duromer (TS)) hergestellt werden. Additive Fertigungsverfahren (ALM) sind interessant für die Grünkörperherstellung, basieren aber häufig auf Thermoplasten (TP), welche sich hingegen während der Pyrolyse wegen deren Schmelzverhalten verformen. Insbesondere sin ALM-Techniken interessant, welche Zuschlagstoffe in Form von Endlosfasern oder Multimaterialien generieren können → Filament Layer Manufacturing (FLM).

Im Stand der Technik ist die Pyrolyse von TS, z. B. Phenolen, als Standardprozess bekannt. ALM mit flüssigen TS-Systemen (Admatec, Formlabs) liefern kein Multimaterial. Zuschlagstoffe sind derzeit schon möglich. ALM mit Thermoplasten, wie z. B. POM (Polyoxymethylen), zur Grünkörperherstellung ist im Stand der Technik bekannt (cerAMfacturing). Die hierbei eingesetzten TPs fungieren als Binder und nicht als Kohlenstoff-Spender. Es kommt zu einem Masseverlust, woraus ein hoher Schrumpf bzw. hohe Spannungen resultieren.

Die technische Lösung umfasst den Einsatz von thermoplastischen Polymeren mit hohem Kohlenstoffgehalt, wie z. B. PEEK und PEKK, etc., und/oder ihre Verarbeitung durch FLM (Fused Layer Modeling) zu einer Grünkörpergeometrie mit nachfolgender Stabilisierung, wie einer thermischen Stabilisierung über Alterung des thermoplastischen Polymers, geometrische Stabilisierung über Nanozuschlagstoffe (Mikro-Netzwerk), und/oder eine Stabilisierung über Bestrahlung.

Mit der technischen Lösung werden mehrere Vorteile erzielt:
Zur Grünkörperherstellung kann ein Standard-FLM-Verfahren zum Einsatz kommen. Die Verwendung/Herstellung von Multimaterial (integrierte Funktionen) oder endlosfaserverstärkten Keramiken ist möglich. Ein mehrstufiger Keramik-Prozess umfassend z. B. Grünkörperherstellung - Pyrolyse - Faserintegration - Pyrolyse - etc. für hochqualitative Keramik-Strukturen ist möglich.

Die erfindungsgemäße Aufgabe betrifft das Gebiet der Keramikverarbeitung oder Keramikherstellung aus einem Polymer-Grünkörper.

Grünkörper-Bauteile auf Polymerbindemittelbasis werden zu einer Keramik verarbeitet. Hierfür findet eine Pyrolyse in Stickstoffatmosphäre unter Erhalt eines Kohlenstoffteil (sogenannter Braunkörper-Zustand) statt. Es folgt die Siliciuminfiltration unter Bildung von Siliciumcarbid (sogenannter Keramik-Zustand).

Das Bindemittel soll sogar während der Pyrolyse stabil sein (T < 2000 °C). Daher wird üblicherweise ein duroplastisches Polymer (TS-Polymer, "thermosetting polymers") (Phenolharz) verwendet. Verfügbare Bindemittel aus/mit thermoplastischem Polymer (TP-Bindemittel) zeigen ein Erweichungsverhalten oder liefern eine geringe oder keine Kohlenstoffausbeute (z. B. BASF/POM). Ein hoher Füllmaterialanteil kann dabei helfen, das Schrumpfen des Grünkörpers zu verringern;

Es ergeben sich somit Aufgaben im Zusammenhang mit Nachteilen der Polymermaterialien, sowohl bei TP-Bindemitteln als auch bei TS-Bindemitteln. TS sind durch das FLM-Verfahren (Fused Layer Manufacturing) kaum verarbeitbar. Ein wesentlicher Nachteil von TPs besteht in ihrem inhärenten Erweichen bei der Glasübergangstemperatur Tg und der Schmelztemperatur Tm. Es kann zu geometrischen Verformungen des Grünkörpers während der Pyrolyse kommen.

Trotz dieser Probleme stellt das FLM-Verfahren aber das richtige Verfahren für die Herstellung großer Strukturen aus Multimaterial und/oder mit Faserverstärkung dar.

Es ist eine Idee, ausgehend von dem FLM-Verfahren zur Herstellung eines Grünkörpers ein verbessertes Verfahren für die Herstellung eines Braunkörpers und eines keramischen Bauteils sowie verbesserte Grünkörper, Braunkörper und keramische Bauteile anzugeben.

Es wird hier ein neuer Ansatz und ein neues Verfahren für die Herstellung von Keramiken auf der Basis von TP unter FLM-Verarbeitung offenbart.

Das neue Verfahren basiert auf einer speziellen Materialauswahl oder speziellen Zusammensetzung und einer daran angepassten Vorbehandlung.

Es wird eine Verarbeitung von TPs in einem FLM-Verfahren mit verschiedenen Polymeren und/oder funktionalen Füllmaterialien zum Grünkörper-Teil vorgeschlagen.

Polyaryletherketone (PAEKs), Polyetherimide (PEI), etc. liefern nach der Pyrolyse eine hohe Kohlenstoffausbeute (etwa 50 %).

Mikrofüllmaterialien auf der Basis von SiC, C, Si etc. dienen dazu, das Schrumpfen zu verringern.

Nanofüllmaterialien ermöglichen es, die Wärmestabilität des Grünkörpers zu erhöhen und ihm eine Funktionalität zu verleihen, wie Leitfähigkeit etc.

Verbesserte Eigenschaften werden durch eine spezielle Vorbehandlung des Grünkörperteils durch Alterung und/oder Vernetzung erhalten. Daran schließen sich eine Standard-Pyrolyse und die Siliciuminfiltration zur Keramik an.

Im Ergebnis liefert das hier offenbarte Verfahren eine qualitativ hochwertige Keramik mit der Option für Multimaterial/Funktionalität
Es gibt insbesondere 3 Strategien zur Stabilisierung des Grünkörpers aus Polymer.

Eine erste Strategie betrifft die gezielte Alterung der Polymere. An und für sich stellt die Alterung von Polymeren ein bekanntes Problem dar. Im Rahmen der Herstellung eines keramischen Bauteils aus einem polymeren Grünkörper ist sie jedoch kein Fehler, sondern ein technisches Merkmal einer bevorzugten Ausführungsform der Erfindung.

Die Alterung ist ein Abbau von Polymerketten. Sie führt zu einer Verringerung von Spannung, Zähigkeit und Festigkeit, zu einer Zunahme der Sprödigkeit, des Moduls und der thermischen Stabilität (Verlust des Schmelzverhaltens)

Als Alterungsverfahren werden vorgeschlagen:
- Auswählen eines Polymers mit der Fähigkeit zu altern, insbesondere thermooxidativ zu altern, z. B. alle Arten von PAEKs, wie PEEK und PEKK;
- Alterungstemperatur ca. 20 °C unterhalb der Temperatur, bei der das Erweichen einsetzt (z. B. Wärmeformbeständigkeitstemperatur HDT oder Temperatur T_{M}, bei der das Schmelzen einsetzt) → Verformungen werden vermieden, kritische Bereiche werden unterstützt, alternativ wird die Alterungstemperatur gesenkt;
- Alterung an der Umgebungsluft (Atmosphäre).

Eine zweite Strategie betrifft die Einarbeitung von Nanofüllmaterialien. Nanofüllmaterialien können verwendet werden, um die Nachteile thermoplastischer Materialien zu mildern. Kohlenstoffnanoröhren (CNTs) oder Ruße (CB) erzeugen eine Art Netzwerk/Mikronetzwerk während der Pyrolyse. das Kohlenstoff-Netzwerk kann als tragende Komponente wirken, wenn das Polymer erweicht. Dies ermöglicht es, das Polymer in den Kohlenstoff-Zustand zu überführen und dabei die geometrische Integrität des Teils zu wahren. Außerdem ermöglicht die Addition von CNTs oder CBs eine erhöhte Kohlenstoffausbeute.

Eine dritte Strategie betrifft das Vernetzen des TPs nach Herstellung des Grünkörpers durch FLM.

TPs können (teilweise) vernetzt werden, und zwar chemisch, thermisch oder mit Elektronenstrahl-Strahlung (alpha-, beta-, gamma-Strahlung).

Für bestimmte TPs stehen bestimmte Vernetzungstechniken zur Verfügung. Hinsichtlich der chemischen Vernetzung sind einige Konzepte für PEEK bekannt (z.B. Greene Tweed Arlon 3000 XT, MIT). Eine thermische Vernetzung ist beispielsweise im Fall von PPS möglich und führt zur Erhöhung des Molekulargewichts durch die Vernetzung. Ebenfalls möglich ist die Vernetzung mit Elektronenstrahl-Strahlung → alpha, beta, gamma-Strahlung. Dieses Verfahren kann beispielsweise bei Polyamiden durchgeführt werden.

Die Vernetzung stellt ein Verfahren mit hohem Potential für die Stabilisierung von TPs für die Verarbeitung zu Keramiken dar.

Zusammenfassend wird festgestellt:
Die Stabilisierung von thermoplastischen Materialien, die als Bindemittel während der Herstellung einer Keramik verwendet werden, durch Alterung, mit Nanofüllmaterialien und/oder durch Vernetzen, liefert verbesserte Ergebnisse bei der Pyrolyse des Grünkörpers.

Beispielhaft können folgende Beispiele für Materialien und Verfahren angegeben werden:
- Materialverbindung: PEEK oder PEKK mit mehr als 50 Masse-% SiC-Pulver und 3 - 5 % CNTs; und/oder
- FLM-Drucken des Grünkörpers; und/oder
- Altern in einem Ofen bei 300 °C an der Luft über mindestens 3 Tage; und/oder
- Pyrolyse bei 1600 °C.

### Bezugszeichenliste:

- 10: Vorrichtung zum Durchführen des Schmelzschichtungsverfahrens
- 12: Filamentspule
- 14: Filament aus Polymermaterial
- 16: Polymermaterial
- 18: Extruder
- 20: Transportrollen
- 22: beheizter Düsenkopf
- 24: Druckbett
- 26: schichtweise aufgebauten Bauteil
- 28: Grünkörper
- 29: stabilisierter Grünkörper
- 30: Braunkörper
- 32: keramischer Gegenstand

## Patentansprüche

1. Verfahren zum Herstellen eines Grünkörpers (28) auf Polymermaterialbasis mit Formstabilität bei der Pyrolyse zu einem Braunkörper (30), das folgende Schritte umfasst:
a) Bereitstellen des Polymermaterials;
b) additives Fertigen des Grünkörpers (28) umfassend das Polymermaterial,
wobei das Polymermaterial in Schritt a) mit einem Stabilisierungsmittel vermischt wird und/oder nach Schritt b) ein weiterer Schritt c) durchgeführt wird, in dem das Polymermaterial des Grünkörpers (28) vollständig oder in Teilbereichen, wie in Oberflächenbereichen, des Grünkörpers (28) stabilisiert wird.

2. Verfahren nach Anspruch 1,
**dadurch gekennzeichnet,**
**dass** das Polymermaterial ein oder mehrere Polymere umfasst, die aus der folgenden Gruppe ausgewählt werden, die umfasst: thermoplastische Polymere, thermoplastische Elastomere, chemisch vernetzbare thermoplastische Polymere, thermisch vernetzbare thermoplastische Polymere, mit einem Elektronenstrahl vernetzbare thermoplastische Polymere, mit alpha-Strahlung vernetzbare thermoplastische Polymere, mit gamma-Strahlung vernetzbare thermoplastische Polymere, unter Einwirkung von Wärme alterungsfähige thermoplastische Polymere, Polyaryletherketone, wie Polyetheretherketon oder Polyetherketonketon, Polylactide, Acrylnitril-Butadien-Styrole, Polycarbonate, Polyphenylsulfone, Aryl-Styrol-Acrylat-Copolymere, Polyethylenterephthalate, Polyoxymethylene, Polyphenylsulfide, Polyamide und Polyetherimide; thermo-oxidierbare thermoplastische Polymere, thermoplastische Polymere mit einer hohen Anzahl an Kohlenstoffatomen, bezogen auf die Gesamtzahl der Kohlenstoffatome pro wiederkehrende Einheit, thermoplastische Polymere, die bei ihrer Pyrolyse eine hohe Kohlenstoffausbeute liefern.

3. Verfahren nach Anspruch 1 oder 2,
**dadurch gekennzeichnet,**
**dass** das in Schritt a) mit dem Polymermaterial vermischte Stabilisierungsmittel ein oder mehrere Füllmaterialien umfasst, die insbesondere aus einer Gruppe ausgewählt werden, die Mikrofüllmaterialien, Nanofüllmaterialien und Füllmaterialien, wie beispielsweise Mikrofüllmaterialien, auf der Basis von Kohlenstoff, Silicium, Siliciumcarbid umfasst.

4. Verfahren nach einem der vorhergehenden Ansprüche,
**dadurch gekennzeichnet,**
**dass** das in Schritt a) mit dem Polymermaterial vermischte Stabilisierungsmittel ein oder mehrere Nanofüllmaterialien umfasst, die aus einer Gruppe ausgewählt werden, die kohlenstoffhaltige Nanopartikel, Kohlenstoffnanoröhren, Ruße, insbesondere Industrieruße, und Fullerene umfasst, und/oder dass in Schritt a) das Stabilisierungsmittel in einem Anteil von vorzugsweise 1 Masse-% bis 8 Masse-%, noch bevorzugter 3 Masse-% bis 5 Masse-%, zugegeben wird.

5. Verfahren nach einem der vorhergehenden Ansprüche,
**dadurch gekennzeichnet,**
**dass** das in Schritt a) bereitgestellte Polymermaterial umfasst:
- ein oder mehrere thermoplastische Polymere, insbesondere Polyaryletherketone, vorzugsweise Polyetheretherketon oder Polyetherketonketon, insbesondere in einem Anteil größer als 10 Masse-%, vorzugsweise größer als 30 Masse-%, beispielsweise größer als 50 Masse-%;
- ein oder mehrere Mikrofüllstoffe, insbesondere auf der Basis von Siliciumcarbid, Kohlenstoff und/oder Silicium, und
- ein oder mehrere Nanofüllstoffe, insbesondere Kohlenstoffnanoröhren, insbesondere in einem Anteil im Bereich von 1 Masse-% bis 7 Masse-%, vorzugsweise 3 Masse-% bis 5 Masse-%.

6. Verfahren nach einem der vorhergehenden Ansprüche,
**dadurch gekennzeichnet, dass** Schritt c) umfasst:
c1) Erhitzen des Grünkörpers (28) auf eine vorgegebene Temperatur über eine vorgegebene Zeit, wobei die Temperatur und die Zeit so gewählt werden, dass eine Alterung , insbesondere thermo-oxidative Alterung des Polymermaterials herbeigeführt wird; und/oder
c2) chemisches Vernetzen des Polymermaterials des Grünkörpers (28); und/oder
c3) Bestrahlen des Grünkörpers (28) mit alpha-Strahlung, beta-Strahlung, einem Elektronenstrahl oder gamma-Strahlung zum Vernetzen des Polymermaterials; und/oder
c4) Erhitzen des Grünkörpers (28) auf eine Temperatur, bei der eine thermisch induzierte Vernetzung des Polymermaterials stattfindet.

7. Verfahren nach Anspruch 6,
**dadurch gekennzeichnet, dass**
7.1) Schritt c1) einen, mehrere oder alle der folgenden Schritte umfasst:
- Erhitzen des Grünkörpers (28) auf eine vorgegebene Temperatur über eine vorgegebene Zeit, wobei die Temperatur und die Zeit so gewählt werden, dass die Steifigkeit, die Härte und die Festigkeit des Polymermaterials verringert werden, ohne die Formtreue des Bauteils während der Pyrolyse zu beeinflussen, und/oder die Sprödigkeit, der Modul, die Wärmestabilität erhöht werden und/oder die Schmelzfähigkeit beseitigt wird; und/oder
- Erhitzen des Polymermaterials auf eine Temperatur unterhalb der Temperatur, bei der das Erweichen des Polymermaterials einsetzt, insbesondere eine Temperatur, die 5 °C bis 50 °C, insbesondere 10 °C bis 30 °C unter der Temperatur liegt, bei der das Erweichen des Polymermaterials einsetzt; und/oder
- Erhitzen des Polymermaterials auf eine vorgegebene Temperatur über einen Zeitraum von 1 bis 15 Tagen; und/oder
- Erhitzen des Polymermaterials auf eine vorgegebene Temperatur, die 5 °C bis 50 °C, insbesondere 10 °C bis 30 °C unter der Wärmeformbeständigkeitstemperatur oder der Schmelztemperatur liegt, über eine vorgegebene Zeit, die abhängig von der gewählten Temperatur so gewählt wird, dass eine Alterung, insbesondere thermo-oxidative Alterung des Polymermaterials stattfindet; und/oder
- Erhitzen des Polymermaterials an der Umgebungsluft, insbesondere unter Erhalt einer thermo-oxidativen Alterung des Polymermaterials; und/oder
- Auswählen eines Polymers als Polymermaterial oder für das Polymermaterial, das Alterungsfähigkeiten, insbesondere die Fähigkeit zur thermo-oxidativen Alterung, aufweist, wie eines Polyaryletherketons, insbesondere von Polyetheretherketon oder Polyetherketonketon;
- Erhitzen des Polymermaterials, insbesondere umfassend ein Polyaryletherketon, in einem Ofen auf eine Temperatur im Bereich von 280 °C bis 320 °C, insbesondere 300 °C, an der Luft, und Beibehalten dieser Temperatur über mindestens 3 Tage; und/oder
- Erhitzen des Polymermaterials unter Unterstützung der Bereiche des Grünkörpers (28), die sich beim Erhitzen durch Erweichen verformen könnten; und/oder
7.2) Schritt c2) einen, mehrere oder alle der folgenden Schritte umfasst:
- chemisches Vernetzen des Polymermaterials in Teilbereichen des Grünkörpers (28), wie im Oberflächenbereich, oder in seinem gesamten Volumen;
- chemisches Vernetzen eines Polymermaterials, das ein Polyaryletherketon, insbesondere Polyetheretherketon, umfasst; und/oder
- chemisches Vernetzen mit einem Vernetzungsmittel oder Härter, der dem Polymermaterial in Schritt a) und vor dem additiven Fertigen des Grünkörpers (28) in Schritt b) zugesetzt wird; und/oder
- chemisches Vernetzen nach Imprägnieren der Oberfläche des Grünkörpers (28) mit einem Vernetzungsmittel oder Härter; und/oder
7.3) Schritt c3) einen, mehrere oder alle der folgenden Schritte umfasst:
- Bestrahlen des Grünkörpers (28) mit alpha-Strahlung, beta-Strahlung, gamma-Strahlung oder einem Elektronenstrahl zum Vernetzen des Polymermaterials in Teilbereichen des Grünkörpers (28), wie im Oberflächenbereich, oder in seinem gesamten Volumen; und/oder
- Verwenden eines Polymermaterials umfassend ein Polyamid und Bestrahlen des Polyamids mit einem Elektronenstrahl, und/oder
7.4) Schritt c4) umfasst:
- thermisches Vernetzen eines Polyphenylsulfons, insbesondere unter Erhöhen des Molekulargewichts durch das Vernetzen.

8. Verfahren nach einem der vorhergehenden Ansprüche,
**dadurch gekennzeichnet,**
**dass** das in Schritt b) durchgeführte additive Fertigungsverfahren das Schmelzschichtungsverfahren ist.

9. Verfahren zum Herstellen eines Braunkörpers (30) aus Kohlenstoff, das umfasst:
- Durchführen des Verfahrens nach einem der Ansprüche 1 bis 8 unter Erhalt eines stabilisierten Grünkörpers (28); und
- Pyrolysieren des stabilisierten Grünkörpers (28) unter Erhalt eines Braunkörpers (30), der im Wesentlichen aus Kohlenstoff besteht.

10. Verfahren nach Anspruch 8,
**dadurch gekennzeichnet,**
**dass** die Pyrolyse bei einer Temperatur vorzugsweise unter 2000 °C, wie im Bereich von 850 °C bis 1650 °C, durchgeführt wird, und/oder dass die Pyrolyse unter einem Schutzgas, wie in einer Stickstoffatmosphäre, durchgeführt wird.

11. Verfahren zum Herstellen eines keramischen Gegenstands, der Siliciumcarbid umfasst, das folgende Schritte umfasst:
- Durchführen des Verfahrens nach Anspruch 9 oder 10 unter Erhalt eines Braunkörpers (30),
- Inkontaktbringen des Braunkörpers (30) mit geschmolzenem Silicium unter Siliciuminfiltration in den Braunkörper (30) und Bildung eines keramischen Gegenstands.

12. Grünkörper (28), der ein Polymermaterial nach einem der Ansprüche 1 bis 8 umfasst oder der nach einem Verfahren nach einem der Ansprüche 1 bis 8 erhältlich ist.

13. Braunkörper (30), der nach dem Verfahren nach Anspruch 9 oder 10 erhältlich ist.

14. Keramischer Gegenstand (32), der nach dem Verfahren nach Anspruch 11 erhältlich ist.

15. Verwendung eines oder mehrerer Nanofüllmaterialien, insbesondere von kohlenstoffhaltigen Nanopartikeln, Kohlenstoffnanoröhren, Rußen, ganz besonders Industrierußen, und Fullerenen, vorzugsweise in einem Anteil von 1 Masse-% bis 8 Masse-%, noch bevorzugter 3 Masse-% bis 5 Masse-%, allein oder in Kombination mit einem oder mehreren Mikrofüllstoffen, insbesondere Mikrofüllstoffen aus oder mit Siliciumcarbid, Kohlenstoff oder Silicium, für die Stabilisierung der Form, insbesondere für den Erhalt einer Formtreue, eines Grünkörpers (30) aus einem Polymermaterial während der Alterung des Grünkörpers (30) und/oder während der Pyrolyse des Grünkörpers (28) zu einem Braunkörper (30).
